# EUROPEAN PATENT SPECIFICATION

(11) **EP 3 712 222 B1**
(45) Date of publication and mention of the grant of the patent: **07.12.2022**
(21) Application number: 18878708.9
(22) Date of filing: 04.10.2018
(51) Int. Cl.: C09J 121/00, C09J 4/02, C09J 11/04

(54) **RADICAL-CURABLE ADHESIVE COMPOSITION, AND ADHESIVE**
RADIKALISCH HÄRTBARE KLEBSTOFFZUSAMMENSETZUNG UND KLEBSTOFF
COMPOSITION ADHÉSIVE DURCISSABLE PAR RADICAUX ET ADHÉSIF

(30) Priority: 17.11.2017 JP 2017222101
(43) Date of publication of application: 23.09.2020
(73) Proprietor: Showa Denko K.K., Tokyo 105-8518 (JP)
(72) Inventor: ITO, Ryohei, Tokyo 105-8518 (JP); TAKAHASHI, Nobuyuki, Tokyo 105-8518 (JP); ISHIUCHI, Ryujin, Tokyo 105-8518 (JP)
(74) Representative: Strehl Schübel-Hopf & Partner
(86) International application number: PCT/JP2018/037236
(87) International publication number: WO 2019/097886

(56) References cited:
- EP-A1- 0 639 595
- EP-A2- 1 036 807
- WO-A1-2015/043998
- WO-A1-2018/008332
- JP-A- S6 169 819
- JP-A- H03 294 329
- JP-A- H05 163 475
- JP-A- H07 326 635
- JP-A- S58 168 619
- JP-A- S59 221 371
- JP-A- S61 148 215
- JP-A- 2000 313 869
- US-A1- 2003 216 513

## Description

### TECHNICAL FIELD

The present invention relates to a radical-curable adhesive composition and an adhesive including the composition.

### BACKGROUND ART

Vinyl ester resins have excellent properties including mechanical properties, chemical resistance, heat resistance and oxidation resistance. Accordingly, vinyl ester resins are used in a broad range of fields. In particular, vinyl ester resins are widely used as materials for adhesives. Adhesive compositions containing a vinyl ester resin exhibit powerful adhesive strength to metals, and are therefore widely used in fields such as the electrical fields, mechanical fields, vehicle fields, and construction material fields.

One example of an adhesive composition containing a vinyl ester resin is an adhesive composition which contains a vinyl ester resin and a rubber. The cured product of this adhesive composition exhibits superior adhesive strength.

Patent Document 1 discloses a curable resin composition prepared by adding a radical generator to a mixture which contains a polymerizable monomer and a vinyl ester resin composition including 1% by mass to 30% by mass of a rubber having a particle size of not more than 1 µm which is dispersed therein.

Patent Document 2 discloses a one-liquid type radical-curable adhesive composition which includes a hindered amine compound having a specific structure, an organic peroxide, an acrylic monomer, and a polymerizable oligomer having two or more (meth)acryloyl groups within the molecule.

Patent Document 3 discloses a heat-resistant acrylic-based adhesive composition which includes methacrylic acid, a (meth)acrylic monomer other than methacrylic acid containing isobornyl (meth)acrylate, a liquid rubber having a polymerizable unsaturated double bond on the terminal ends thereof, an organic peroxide, and a reducing agent.

Patent Document 4 discloses an adhesive which includes a free-radical polymerization initiator and a reaction product of an organic compound having an acryloyl group or a methacryloyl group and an epoxy group and an acrylonitrile-butadiene copolymer having a carboxyl group on the terminal end thereof.

Patent Document 5 discloses a propylene-based resin composition which includes a resin composition comprising a propylene-based resin and an olefin-based resin, and a tabular filler having an aspect ratio of 8 or more and less than 20.

Further, as described in Non-Patent Document 1, polymer materials exhibit very different surface tension values from metals and typical adhesives such as polyvinyl acetate emulsions and epoxy-based adhesives. Accordingly, conventionally, surfaces of a substrate is subjected to a surface treatment to adjust the surface tension of the substrate to a value close to the surface tension of the adhesive, thereby improving the adhesive strength of the adhesive to the substrate. As described in Non-Patent Document 1, examples of surface treatment methods include physical methods and chemical methods. Examples of the physical methods include sanding, corona, plasma, flame and ultraviolet treatments. In terms of the chemical methods, methods in which functional groups having high polarity are introduced onto the substrate surface are becoming widespread.

### PRIOR ART LITERATURE

### Patent Documents

Patent Document 1: Japanese Unexamined Patent Application, First Publication No. Hei 06-9738
Patent Document 2: Japanese Unexamined Patent Application, First Publication No. 2008-94913
Patent Document 3: Japanese Unexamined Patent Application, First Publication No. Hei 09-241585
Patent Document 4: Japanese Unexamined Patent Application, First Publication No. Hei 07-326635
Patent Document 5: Japanese Unexamined Patent Application, First Publication No. 2017-57317

### Non-Patent Document

Non-Patent Document 1: Adhesion technology, Vol. 31, No. 3, 2011, pp. 1 to 6 (published by The Adhesion Society of Japan)

### DISCLOSURE OF INVENTION

### Problems to be Solved by the Invention

However, conventional adhesive compositions have been unable to produce cured products that exhibit superior adhesive strength under high-temperature conditions.

In order to improve adhesive strength, the surface of the substrate may be subjected to the surface treatment. However, when the surface of a substrate is subjected to the surface treatment, there is a possibility that the substrate may suffer damage such as shrinkage, deformation or degradation. Further, because a step of performing the surface treatment of the substrate surface becomes necessary prior to bonding of the substrate, extra effort is required, and costs tend to increase. Accordingly, it is preferable that the surface of the substrate to be bonded is not subjected to the surface treatment.

In addition, cured products of conventional adhesive compositions have a large linear expansion coefficient as compared with substrates such as a substrate made of metal. Therefore, for example, when metal is bonded with such adhesive compositions, there is a case that cracks are generated in the cured products and therefore adhesive strength deteriorates due to the stress which is caused by the difference between a linear expansion coefficient of metal and that of the cured product of the adhesive compositions. In particular, there is a problem that adhesive strength tends to deteriorate in an environment having severe temperature change.

Accordingly, an adhesive composition is required which can provide a cured product which has superior thermal shock resistance and can withstand an environment in which severe temperature change (thermal shock) occurs.

In order to improve the thermal shock resistance of a cured product, a linear expansion coefficient of the cured product may be decreased so that a difference between a linear expansion coefficient of the cured product and that of the substrate becomes small, and the strength of the cured product may be increased so that the cured product can withstand the stress generated by a linear expansion difference between the substrate and the cured product. As a method of increasing the strength of the cured product while decreasing the linear expansion coefficient of the cued product, a method can be considered that an inorganic filler is added in an adhesive composition.

However, if an amount of the inorganic filler in the adhesive composition increases so that a genrated cured product has sufficient thermal shock resistance, an adhesive strength becomes insufficient since wettability to a substrate deteriorates. In addition, viscosity of the adhesive composition increases as the amount of an inorganic filler in the adhesive composition increases. Accordingly, bubble tends to be caught between the substrate and the adhesive composition, and adhesion failure tends to be caused. Consequently, thermal shock resistance of a cured product was not sufficiently improved by the method in which an inorganic filler is added in an adhesive composition.

In addition, there are adhesive compositions which are used as an adhesive used for the electric and electronic components, a sealant used for the electric and electronic components, and an adhesive used for the transport device. Superior adhesive strength under high temperature condition and superior thermal shock resistance are particularly required for cured products of the adhesive compositions which are used for such a use described above.

The present invention has been made in light of the above circumstances, and has an object of providing a radical-curable adhesive composition which can generate a cured product that exhibits superior adhesive strength under high-temperature conditions without requiring a surface treatment and exhibits superior thermal shock resistance.

Further, the present invention also has an object of providing an adhesive which contains the radical-curable adhesive composition described above.

Furthermore, the present invention also has an object of providing electric and electronic components and a transport device in which a component thereof has been bonded and/or encapsulated by a cured product of the radical-curable adhesive composition described above.

### Means for Solving the Problems

The inventors of the present invention undertook intensive studies with the aim of achieving the above objects.

As a result, they found that it is possible to achieve the objects by using a radical-curable adhesive composition containing, as essential components, a rubber having one or more (meth)acryloyl groups within a single molecular chain, a polymerizable monomer having both an epoxy group and a (meth)acryloyloxy group in the molecule, a radical polymerization initiator and an acicular filler having a fiber length of 500 to 2000 µm and an aspect ratio of 5 to 300, and were thus able to result in the present invention.

In the present description and the claims, the term "(meth)acryloyloxy group" means an acryloyloxy group or a methacryloyloxy group. Similarly, a "(meth)acryloyl group" means an acryloyl group or a methacryloyl group, "(meth)acrylic acid" means acrylic acid or methacrylic acid, and a "(meth)acrylate" means an acrylate or a methacrylate.

The present invention was completed based on the above discovery, and a summary of the invention is as follows.

[1] A radical-curable adhesive composition according to the first aspect of the present invention contains:
   a rubber (a) having one or more (meth)acryloyl groups within a single molecular chain thereof,
   a polymerizable monomer (b) having both an epoxy group and a (meth)acryloyloxy group in a molecule thereof,
   a radical polymerization initiator (c) and
   an acicular filler (d) having a fiber length of 500 to 2000 µm and an aspect ratio of 5 to 300.
[2] The radical-curable adhesive composition according to [1], wherein the acicular filler (d) may be wollastonite or a glass fiber.
[3] The radical-curable adhesive composition according to [1] or [2], wherein an amount of the acicular filler (d) may be 50 to 500 parts by mass based on 100 parts by mass of the rubber (a).
[4] The radical-curable adhesive composition according to any one of [1] to [3], wherein the rubber (a) may be a polymer of a monomer containing at least acrylonitrile.
[5] The radical-curable adhesive composition according to any one of [1] to [4], wherein a main chain of the rubber (a) may be a copolymer of acrylonitrile and butadiene.
[6] The radical-curable adhesive composition according to any one of [1] to [5], wherein the polymerizable monomer (b) may contain glycidyl (meth)acrylate.
[7] The radical-curable adhesive composition according to any one of [1] to [6], the radical-curable adhesive composition may also contain a polymerizable monomer (e) other than the polymerizable monomer (b) and excluding (meth)acrylic acid.
[8] The radical-curable adhesive composition according to any one of [1] to [7], wherein the radical-curable adhesive composition may also contain a polymerizable monomer (e) other than the polymerizable monomer (b) and excluding (meth)acrylic acid, and the total amount of the polymerizable monomer (b) and the polymerizable monomer (e) other than the polymerizable monomer (b) and excluding (meth)acrylic acid may be from 20 to 200 parts by mass based on 100 parts by mass of the rubber (a).
[9] The radical-curable adhesive composition according to any one of [1] to [8], wherein the radical-curable adhesive composition may also contain a polymerizable monomer (e) other than the polymerizable monomer (b) and excluding (meth)acrylic acid, and the amount of the polymerizable monomer (b) is from 10 to 100 parts by mass based on 100 parts by mass of the total amount of the polymerizable monomer (b) and the polymerizable monomer (e) other than the polymerizable monomer (b) and excluding (meth)acrylic acid.
[10] The radical-curable adhesive composition according to any one of [1] to [9], wherein the radical-curable adhesive composition may also contain a vinyl ester compound (f).
[11] The radical-curable adhesive composition according to [10], wherein the total amount of the rubber (a) and the vinyl ester compound (f) may be from 105 to 200 parts by mass based on 100 parts by mass of the rubber (a).
[12] The radical-curable adhesive composition according to any one of [1] to [11], wherein the radical-curable adhesive composition may also contain an inorganic filler (g) other than the acicular filler (d).
[13] The radical-curable adhesive composition according to any one of [1] to [12], wherein the radical-curable adhesive composition may also contain an inorganic filler (g) other than the acicular filler (d), and the total amount of the acicular filler (d) and the inorganic filler (g) other than the acicular filler (d) may be from 60 to 800 parts by mass based on 100 parts by mass of the rubber (a).
[14] The radical-curable adhesive composition according to any one of [1] to [13], wherein a cured product of the adhesive composition may have insulating properties.
[15] An adhesive of the second aspect of the present invention contains the radical-curable adhesive composition according to any one of [1] to [14].
[16] An electric and electronic component of the third aspect of the present invention is an electric and electronic component in which a component thereof has been bonded and/or encapsulated using a cured product of the radical-curable adhesive composition according to any one of [1] to [15].
[17] A transport device of the fourth aspect of the present invention is a transport device in which a component thereof has been bonded using a cured product of the radical-curable adhesive composition according to any one of [1] to [15].
[18] The radical-curable adhesive composition according to any one of [1] to [14], wherein the amount of the polymerizable monomer (b) may be from 20 to 200 parts by mass based on 100 parts by mass of the rubber (a), (i) the amount of the radical polymerization initiator (c) may be from 0.1 to 10 parts by mass based on 100 parts by mass of the amount of the rubber (a), the monomer (b), a monomer (e) and a compound (f), in a case where the polymerizable monomer (e) and the vinyl ester compound (f) are included in the radical-curable adhesive composition, (ii) the amount of the radical polymerization initiator (c) may be from 0.1 to 10 parts by mass based on 100 parts by mass of the amount of the rubber (a), the monomer (b) and a polymerizable monomer (e), in a case where the polymerizable monomer (e) is included and a vinyl ester compound (f) is not included in the radical-curable adhesive composition, (iii) the amount of the radical polymerization initiator (c) may be from 0.1 to 10 parts by mass based on 100 parts by mass of the amount of the rubber (a), the monomer (b), and a vinyl ester compound (f), in a case where a polymerizable monomer (e) is not included and the vinyl ester compound (f) is included in the radical-curable adhesive composition, and (iv) the amount of the radical polymerization initiator (c) may be from 0.1 to 10 parts by mass based on 100 parts by mass of the amount of the rubber (a) and the monomer (b), in a case where a vinyl ester compound (f) and a polymerizable monomer (e) are not included in the radical-curable adhesive composition, and an amount of the acicular filler (d) may be 50 to 400 parts by mass based on 100 parts by mass of the amount of the rubber (a).
[19] The radical-curable adhesive composition according to any one of [1] to [14] and [18], wherein the radical-curable adhesive composition may also include a polymerizable monomer (e) other than the polymerizable monomer (b) and excluding (meth)acrylic acid, a vinyl ester compound (f) and an inorganic filler (g),
   an amount of the polymerizable monomer (e) may be 5 to 70% by mass based on 100 parts by mass of the total amount of the polymerizable monomer (b) and the polymerizable monomer (e),
   an amount of the vinyl ester compound (f) may be 5 to 100 parts by mass based on 100 parts by mass of the amount of the rubber (a), and
   an amount of the inorganic filler (g) may be 20 to 300 parts by mass based on 100 parts by mass of the acicular filler (d).

### Effects of the Invention

By curing the radical-curable adhesive composition of the present invention, a cured product can be obtained which exhibits superior adhesive strength under high-temperature conditions without requiring a surface treatment and has superior thermal shock resistance. As a result, the radical-curable adhesive composition of the present invention can be used favorably as an adhesive and/or an encapsulating agent for electric and electronic component and as an adhesive for transport device.

The adhesive of the present invention contains the radical-curable adhesive composition of the present invention, and therefore it is possible to provide a cured product which exhibits superior adhesive strength under high-temperature conditions without requiring a surface treatment and has superior thermal shock resistance.

Further, an electric and electronic component of the present invention has a component which has been bonded and/or encapsulated using a cured product of the radical-curable adhesive composition of the present invention, and therefore has favorable thermal shock resistance.

Moreover, a transport device of the present invention has a component that has been bonded using a cured product of the radical-curable adhesive composition of the present invention, and therefore has favorable thermal shock resistance.

### PREFERRED EMBODIMENTS

Preferable examples of the radical-curable adhesive composition, the adhesive, the electric and electronic component and the transport device of the present invention are described below in further detail. However, the present invention is not limited only to embodiments described below. Appropriate modifications may occur within the scope of being capable of achieving the effect of the present invention. For example, omissions, additions, replacements and other changes may occur with respect to numbers, values, amounts, ratios, properties and the like within the scope without departing from the spirit of the present invention.

### [Radical-Curable Adhesive Composition]

The radical-curable adhesive composition of this embodiment (hereafter sometimes referred to as "the adhesive composition") contains, as essential components, a rubber (a) having one or more (meth)acryloyl groups within a single molecular chain, a polymerizable monomer (b) having both an epoxy group and a (meth)acryloyloxy group in the molecule thereof, a radical polymerization initiator (c) and an acicular filler (d) having a fiber length of 500 µm to 2000 µm and an aspect ratio of 5 to 300 .

The adhesive composition of the present embodiment may also contain one or more components selected from a polymerizable monomer (e) which is other than the polymerizable monomer (b) and excluding (meth)acrylic acid (hereafter sometimes referred to as "the polymerizable monomer (e)"), a vinyl ester compound (f), and an inorganic filler (g) which is other than the acicular filler (d).

### <Rubber (a) having one or more (meth)acryloyl groups within a single molecular chain>

The rubber (a) in the adhesive composition of the present embodiment has the functions of improving the heat resistance and the flexibility of the cured product of the adhesive composition, and improving the adhesive strength.

There are no particular limitations on the rubber (a) having one or more (meth)acryloyl groups within a single molecular chain, provided that the rubber has one or more (meth)acryloyl groups within a single molecular chain thereof and has a rubber structure within the skeleton thereof. The rubber (a) may have a branched structure within the molecule chain thereof. The rubber (a) may have a three-dimensional network structure.

The rubber (a) is preferably a polymer of a monomer that includes at least acrylonitrile. The main chain of the rubber (a) is preferably a copolymer of acrylonitrile and butadiene.

Further, from the viewpoint of favorable compatibility with the polymerizable monomer (b) having both an epoxy group and a (meth)acryloyloxy group in the molecule, the rubber (a) is preferably a liquid at 25°C, and more preferably has a viscosity at 25°C of not more than 1,000,000 mPa·s.

The (meth)acryloyl group of the rubber (a) may be introduced by modifying the rubber skeleton. Further, the (meth)acryloyl group of the rubber (a) may also be introduced within the rubber skeleton, by copolymerizing vinyl methacrylate with the monomers used in forming the rubber skeleton such as butadiene and acrylonitrile.

From the viewpoint of the heat resistance of the cured product of the adhesive composition, the rubber (a) preferably has one to three (meth)acryloyl groups as an averaged value within a single molecular chain thereof, and more preferably has two (meth)acryloyl groups within a single molecular chain thereof. A plurality of kinds of compounds which have different numbers of (meth)acryloyl groups within the molecular chain thereof may combined to be used as the rubber (a).

Examples of the skeleton of the rubber (a) include butadiene rubber, chloroprene rubber, styrene-butadiene rubber, acrylonitrile-butadiene rubber, and hydrogenated acrylonitrile-butadiene rubber and the like. the rubber skeletons may be used alone, or a combination of a plurality of kinds of the skeletons may be used. Among the various skeletons described above of the rubber (a), acrylonitrile-butadiene rubber and hydrogenated acrylonitrile-butadiene rubber are preferred from the viewpoint of the compatibility with the polymerizable monomer (b) having both an epoxy group and a (meth)acryloyloxy group in the molecule, and an acrylonitrile-butadiene rubber is particularly preferred. However, the skeleton of the rubber (a) is not limited to these examples.

The number average molecular weight of the rubber (a) is preferably within a range from 1,000 to 20,000, more preferably within a range from 2,000 to 10,000, and even more preferably within a range from 3,000 to 6,000. Provided that the molecular weight of the rubber (a) is 1,000 or more, curing of the adhesive composition is able to produce a cured product that exhibits superior adhesive strength under high-temperature conditions, and also has superior mechanical strength with favorable fatigue resistance. Further, provided that the molecular weight of the rubber (a) is not more than 20,000, an adhesive composition having a viscosity that ensures favorable handling properties is obtained.

Examples of commercially available rubbers (a) include RIPOXY (a registered trademark) EFN-1000 (manufactured by Showa Denko K.K.), and HYPRO (a registered trademark) 1300X33LC VTBNX and 1300X43LC VTBNX (manufactured by Emerald Performance Materials, LLC), which are vinyl ester-modified acrylonitrile-butadiene rubbers.

### <Polymerizable monomer (b) having both an epoxy group and a (meth)acryloyloxy group in the molecule>

The polymerizable monomer (b) in the adhesive composition of the present embodiment has the functions of improving the heat resistance and the hardness of the cured product of the adhesive composition, and improving the adhesion and adhesive strength of the composition.

There are no particular limitations on the polymerizable monomer (b), provided that the monomer has both an epoxy group and a (meth)acryloyloxy group within the molecule. Specific examples of the polymerizable monomer (b) include glycidyl acrylate and glycidyl methacrylate. The polymerizable monomers (b) may be used alone, or a plurality of kinds of the polymerizable monomers may be used in combination.

In those cases where the adhesive composition of the present embodiment does not contain a polymerizable monomer (e) other than the polymerizable monomer (b) and excluding (meth)acrylic acid, the amount of the polymerizable monomer (b), based on 100 parts by mass of the rubber (a), is preferably from 20 to 200 parts by mass, more preferably from 30 to 160 parts by mass, and even more preferably from 40 to 120 parts by mass. Provided that the amount of the polymerizable monomer (b) is at least 20 parts by mass based on 100 parts by mass of the rubber (a), an adhesive composition capable of forming a cured product with even better adhesion is obtained. Further, provided that the amount of the polymerizable monomer (b), which has a higher acrylic equivalent weight than the rubber (a), is not more than 200 parts by mass based on 100 parts by mass of the rubber (a), the amount of shrinkage during curing can be suppressed, which is desirable. Furthermore, the cured product of an adhesive composition in which the amount of the polymerizable monomer (b) is not more than 200 parts by mass based on 100 parts by mass of the rubber (a) has favorable flexibility and can conform to thermal expansion of the substrate, and therefore superior adhesive strength can be achieved under high-temperature conditions.

In those cases where the adhesive composition of the present embodiment contains the polymerizable monomer (e) other than the polymerizable monomer (b) and excluding (meth)acrylic acid, the total amount of the polymerizable monomer (b) and the polymerizable monomer (e), based on 100 parts by mass of the rubber (a), is preferably from 20 to 200 parts by mass, more preferably from 30 to 160 parts by mass, and even more preferably from 40 to 120 parts by mass. Provided that the total amount of the polymerizable monomer (b) and the polymerizable monomer (e) is at least 20 parts by mass based on 100 parts by mass of the rubber (a), an adhesive composition having a viscosity that ensures favorable handling properties is obtained. Further, provided that the total amount of the polymerizable monomer (b) and the polymerizable monomer (e) is not more than 200 parts by mass based on 100 parts by mass of the rubber (a), an adhesive composition is obtained which exhibits a small amount of shrinkage upon curing, and yields a cured product which contains minimal residual unreacted monomers after curing.

In the adhesive composition of the present embodiment, the amount of the polymerizable monomer (b), based on 100 parts by mass of the total amount of the polymerizable monomer (b) and the polymerizable monomer (e), is preferably from 10 to 100 parts by mass, more preferably from 30 to 95 parts by mass, and even more preferably from 50 to 85 parts by mass. Provided that the amount of the polymerizable monomer (b) is at least 10 parts by mass based on 100 parts by mass of the total amount of the polymerizable monomer (b) and the polymerizable monomer (e), a cured product that exhibits superior adhesive strength is obtained.

### <Radical polymerization initiator (c)>

The radical polymerization initiator (c) can be optionally selected, and examples thereof preferably include organic peroxides, azo-based initiators, and redox initiators and the like. Among these, from the viewpoint of reaction efficiency, the use of an organic peroxide is particularly preferred as the radical polymerization initiator (c). Conventional compounds such as cumene hydroperoxide, dialkyl peroxides, acyl peroxides, hydroperoxides, ketone peroxides and peroxy esters may be used as the organic peroxide.

Specific examples of the organic peroxide include diisobutyryl peroxide, cumyl peroxyneodecanoate, di-n-propyl peroxydicarbonate, diisopropyl peroxydicarbonate, disec-butyl peroxydicarbonate, 1,1,3,3-tetramethylbutyl peroxyneodecanoate, di(4-t-butylcyclohexyl) peroxydicarbonate, di(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl peroxide), dilauroyl peroxide, 1,1,3,3-tetramethylbutyl peroxy-2-ethylhexanoate, t-butyl peroxy-2-ethylhexanoate, disuccinic acid peroxide, 2,5-dimethyl-2,5-di(2-ethylhexanoylperoxy)hexane, t-hexyl peroxy-2-ethylhexanoate, di(4-methylbenzoyl) peroxide, tert-butyl-2-ethyl peroxyhexanoate, di(3-methylbenzoyl) peroxide, benzoyl(3-methylbenzoyl) peroxide, dibenzoyl peroxide, 1,1-di(t-butylperoxy)-2-methylcyclohexane, 1,1 -di(t-hexylperoxy)cyclohexane, 1,1 -di(t-hexylperoxy)-3,3,5-trimethylcyclohexane, 1,1 -di(t-butylperoxy)cyclohexane, 2,2-bis[4,4-di(t-butylperoxy)cyclohexyl]propane, t-hexyl peroxy isopropyl monocarbonate, t-butyl peroxy maleic acid, t-butyl peroxy-3,5,5-trimethylhexanoate, t-butyl peroxylaurate, t-butylperoxy isopropyl monocarbonate, t-butylperoxy-2-ethylhexyl monocarbonate, t-hexyl peroxybenzoate, 2,5-dimethyl-2,5-di(benzoylperoxy)hexane, t-butyl peroxyacetate, 2,2-di(t-butylperoxy)butane, t-butyl peroxybenzoate, n-butyl-4,4-di(t-butylperoxy)valerate, di(t-butylperoxyisopropyl)benzene, dicumyl peroxide, di(t-hexyl) peroxide, 2,5-dimethyl-2,5-di(t-butylperoxy)hexane, t-butylcumyl peroxide, di-t-butyl peroxide, p-methane hydroperoxide, 2,5-dimethyl-2,5-di(t-butylperoxy)hexyne, diisopropylbenzene hydroperoxide, 1,1,3,3-tetramethylbutyl hydroperoxide, cumene hydroperoxide and t-butyl hydroperoxide. Here, the aforementioned compounds are preferable examples of the organic oxide which can be used in the present invention, and the examples of the organic oxide are not limited thereto.

Among the above organic peroxides, from the viewpoint of productivity, the organic peroxides having from 50°C to 130°C of the one-hour half-life temperature is preferable, more preferably from 60°C to 120°C, and even more preferably from 70°C to 110°C. From the viewpoints of the reaction temperature and the storage properties, t-butyl peroxy-2-ethylhexanoate which has a one-hour half-life temperature of 92°C or 1,1-di(t-hexylperoxy)cyclohexane which has a one-hour half-life temperature of 107°C is preferred.

The radical polymerization initiators (c) may be used alone, or a plurality of kinds of the initiators may be used in combination.

The amount of the radical polymerization initiator (c), based on 100 parts by mass of the total amount of the rubber (a), the polymerizable monomer (b), the polymerizable monomer (e) and the vinyl ester compound (f) (the total of (a), (b), (e) and (f) (or the total of (a), (b) and (f) in the case where (e) is not included, or the total of (a), (b) and (e) in the case where (f) is not included, or the total of (a) and (b) in the case where (e) and (f) are not included)), is preferably from 0.1 parts by mass to 10 parts by mass, more preferably from 0.5 parts by mass to 5 parts by mass, and even more preferably from 0.8 parts by mass to 3 parts by mass. Provided that the amount of the radical polymerization initiator (c) is at least 0.1 parts by mass based on 100 parts by mass of the aforementioned total of (a), (b), (e) and (f), a satisfactory curing rate can be achieved. On the other hand, provided that the amount added of the radical polymerization initiator (c) is not more than 10 parts by mass based on 100 parts by mass of the aforementioned total of (a), (b), (e) and (f), an adhesive composition having favorable storage stability can be obtained.

### <Acicular filler (d) having a fiber length of 500 to 2000 µm and an aspect ratio of 5 to 300>

The acicular filler (d) having a fiber length of 500 to 2000 µm and an aspect ratio of 5 to 300 has the functions of increasing the mechanical strength of the cured product obtained from the adhesive composition and also has the functions of increasing the thermal shock resistance and the heat resistance. The acicular filler (d) has the fiber length and the aspect ratio which are included in the ranges described above. Therefore, as compared with a case that a filler which has a fiber length and an aspect ratio which are not included in the ranges described above is included, deterioration of wettability to a substrate and an increase in viscosity are hard to occur when the acicular filler is included in the adhesive composition. Therefore, a sufficient amount of the acicular filler (d) can be included in the adhesive composition to obtain a cured product having superior thermal shock resistance and superior heat resistance.

There are no particular limitations on the acicular filler (d), provided that the acicular filler (d) has a fiber length of 500 to 2000 µm and an aspect ratio of 5 to 300. The acicular filler (d) may be an insulating filler or a conductive filler. Specific examples of the insulating acicular filler (d) include wollastonite, glass fiber and the like. Specific examples of the conductive acicular filler (d) include chopped strands of a carbon fiber. These acicular filler (d) may be used alone, or a plurality of kinds of the fillers may be used in combination.

The fiber length of the acicular filler (d) of the present invention means a volume average particle diameter d50 which is obtained using a laser diffraction/ scattering type particle size distribution measuring method. However, when the acicular filler (d) is a glass fiber, the fiber length of the fiber is a value obtained by the measuring method based on "7.8 Length of chopped strands" which is described in Japanese Industrial Standards JIS R-3420:2013 "Testing methods for textile glass products".

The aspect ratio of the acicular filler (d) is a value obtained by the measuring method using a microscope based on "7.8 Length of chopped strands" which is described in Japanese Industrial Standards JIS R-3420:2013 "Testing methods for textile glass products".

The fiber length of the acicular filler (d) is 500 to 2000 µm, preferably 600 to 1800µm, and more preferably 700 to 1600 µm.

The aspect ratio of the acicular filler (d) is 5 to 300, preferably 7 to 250, and more preferably 10 to 200.

When the fiber length of the acicular filler (d) is 500 to 2000 µm and the aspect ratio of the acicular filler (d) is 5 to 300, a cured product which has superior thermal shock resistance and superior heat resistance can be obtained. Provided that the fiber length of the acicular filler (d) is at least 500 µm and/or the aspect ratio of the acicular filler (d) is at least 5, it is possible to fulfill both functions of increasing the mechanical strength of a cured product and decreasing a linear expansion coefficient, and therefore the effect of increasing the heat resistance and the thermal shock resistance of a cured product is sufficiently obtained. Provided that the fiber length of the acicular filler (d) does not exceed 2000 µm and/or the aspect ratio of the acicular filler (d) does not exceed 300 µm, the viscosity and thixotropy of the adhesive composition become to a level suitable for operations.

In the adhesive composition of the present embodiment, the amount of the acicular filler (d) is preferably 50 to 500 parts by mass based on 100 parts by mass of the rubber (a), more preferably 50 to 400 parts by mass, and more preferably 50 to 300 parts by mass. Provided that the amount of the acicular filler (d) is at least 50 parts by mass based on 100 parts by mass of the rubber (a), a cured product having superior thermal shock resistance and superior heat resistance can be obtained. On the other hand, provided that the amount of the acicular filler (d) does not exceed 500 parts by mass based on 100 parts by mass of the rubber (a), the adhesive composition has a viscosity by which bubble is hard to be caught, and therefore suitable adhesion can be achieved.

### <Polymerizable monomer (e) other than the polymerizable monomer (b) and excluding (meth)acrylic acid>

The adhesive composition of the present embodiment preferably contains a polymerizable monomer (e) other than the polymerizable monomer (b) and excluding (meth)acrylic acid. The polymerizable monomer (e) in the adhesive composition of the present embodiment is included as a reactive diluent. Specifically, the polymerizable monomer (e) has the functions of adjusting the viscosity of the adhesive composition, the amount of shrinkage during curing, and the toughness and adhesive strength of the cured product. Further, the polymerizable monomer (e) also has the functions of improving the heat resistance, the water resistance and the thermal shock resistance of the cured product.

There are no particular limitations on the polymerizable monomer (e), provided that it cannot be classified as the polymerizable monomer (b) having both an epoxy group and a (meth)acryloyloxy group in the molecule, and is not (meth)acrylic acid. (Meth)acrylic acid has high volatility and has a strong irritating odor. Accordingly, if (meth)acrylic acid is included in the adhesive composition, the workability of the composition may sometimes become insufficient during heat curing. Accordingly, in the embodiment, a monomer which is other than (meth)acrylic acid is used as the polymerizable monomer (e). That is, it is preferable that the adhesive composition of the present invention does not include (meth)acrylic acid. The polymerizable monomer (e) may be used alone, or a plurality of kinds of the monomers may be used in combination.

However, the adhesive composition of the present invention may include (meth)acrylic acid, provided that the workability of the composition is not impaired. The range in which the workability is not impaired means, for example, an amount of not more than 3% by mass of the total adhesive composition. That is, the adhesive composition of the present invention may optionally include (meth)acrylic acid, in so far as the amount of the monomer does not exceed 3% by mass per the total amount of the adhesive composition.

Examples of monofunctional monomers that may be used as the polymerizable monomer (e) include aliphatic (meth)acrylates such as methyl (meth)acrylate, ethyl (meth)acrylate, n-butyl (meth)acrylate, sec-butyl (meth)acrylate, t-butyl (meth)acrylate, 2-ethylhexyl (meth)acrylate, octyl (meth)acrylate, dodecyl (meth)acrylate, octadecyl (meth)acrylate, isobornyl (meth)acrylate, cyclohexyl (meth)acrylate, methylcyclohexyl (meth)acrylate, 4-t-butylcyclohexyl (meth)acrylate, dicyclopentenyloxymethyl (meth)acrylate, dicyclopentenyloxyethyl (meth)acrylate, ethoxyethyl (meth)acrylate, ethoxy diethylene glycol (meth)acrylate, 2-hydroxyethyl (meth)acrylate and 2-hydroxypropyl (meth)acrylate; aromatic (meth)acrylates such as benzyl (meth)acrylate, phenyl (meth)acrylate, phenoxyethyl (meth)acrylate, phenoxy diethylene glycol (meth)acrylate, 1-naphthyl (meth)acrylate, fluorophenyl (meth)acrylate, chlorophenyl (meth)acrylate, cyanophenyl (meth)acrylate, methoxyphenyl (meth)acrylate and biphenyl (meth)acrylate; haloalkyl (meth)acrylates such as fluoromethyl (meth)acrylate and chloromethyl (meth)acrylate; other (meth)acrylate compounds such as alkylamino (meth)acrylates and cyanoacrylate esters; nitrogen-containing monomers such as acrylamide, N,N-dimethylacrylamide, N,N-diethylacrylamide, N-vinylformamide, N-vinylacetamide, N-vinyl-ε-caprolactam, N-vinylpyrrolidone, 1-vinylimidazole, N-vinylcarbazole, N-vinylmorpholine, N-vinylpyridine and acryloylmorpholine; as well as styrene, α-methylstyrene, chlorostyrene, styrenesulfonic acid, 4-hydroxystyrene, vinyltoluene, vinyl acetate, vinyl propionate and vinyl benzoate. The aforementioned monofunctional monomers are examples of the polymerizable monomer (e), and the polymerizable monomer (e) is not limited to them.

Examples of polyfunctional monomers that may be used as the polymerizable monomer (e) include di(meth)acrylates such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, 1,3-butylene glycol di(meth)acrylate, 1,4-butanediol di(meth)acrylate, 1,5-pentanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, dimethyloltricyclodecane di(meth)acrylate, polybutadiene di(meth)acrylate, 2,2-bis(4-(meth)acryloyloxyphenyl)propane, 2,2-bis(4-(ω-(meth)acryloyloxy polyethoxy)phenyl)propane, and bisphenol A ethylene oxide adduct di(meth)acrylates; trifunctional crosslinking monomers such as trimethylolethane tri(meth)acrylate, trimethylolpropane tri(meth)acrylate, trimethylolpropane ethylene oxide adduct triacrylates, and pentaerythritol tri(meth)acrylate; tetrafunctional or higher polyfunctional acrylates such as pentaerythritol tetra(meth)acrylate, pentaerythritol ethylene oxide adduct tetra(meth)acrylates and dipentaerythritol hexa(meth)acrylate; aromatic diallyl carboxylates such as diallyl phthalate, diallyl isophthalate, dimethallyl isophthalate and diallyl terephthalate; and other allyl compounds such as diallyl cyclohexanedicarboxylate and tri(meth)allyl isocyanurate. The aforementioned polyfunctional monomers are examples of the polymerizable monomer (e), and the polymerizable monomer (e) is not limited to them.

Among these polymerizable monomers (e), a monofunctional or difunctional (meth)acrylate is preferred, a monofunctional or difunctional aliphatic (meth)acrylate is more preferred, and ethylene glycol dimethacrylate and isobornyl (meth)acrylate are particularly preferred.

The amount of the polymerizable monomers (e) may be optionally selected, and for example, the amount thereof is preferably 0 to 90% by mass relative to the total amount of the polymerizable monomer (b) and the polymerizable monomers (e), more preferably 5 to 70% by mass, and more preferably 15 to 50% by mass.

### <Vinyl ester compound (f)>

The adhesive composition of the present embodiment may include a vinyl ester compound (f). The vinyl ester compound (f) used in the present invention may be a compound which is obtained by, for example, a ring-opening reaction of an epoxy group of an epoxy compound having two or more epoxy groups with a carboxyl group of an unsaturated monobasic acid having an ethylenically unsaturated bond and the carboxyl group. Such a vinyl ester compound is described, for example, in "Polyester Resin Handbook" (1988, published by Nikkan Kogyo Shimbun, Ltd.).

The vinyl ester compound (f) in the adhesive composition of the present embodiment has the functions of enhancing the rigidity of the cured product of the adhesive composition, and improving the adhesive strength.

Specific examples of the vinyl ester compound (f) include bisphenol vinyl ester resins such as bisphenol A vinyl ester resins, bisphenol AF vinyl ester resins, bisphenol F vinyl ester resins, bisphenol S vinyl ester resins and bisphenol AD vinyl ester resins; and novolac vinyl ester resins such as phenol novolac vinyl ester resins, bisphenol novolac vinyl ester resins, naphthalene novolac vinyl ester resins and cresol novolac vinyl ester resins. Among these vinyl ester compounds (f), bisphenol A vinyl ester resins, phenol novolac vinyl ester resins, bisphenol AF vinyl ester resins and bisphenol F vinyl ester resins are preferred. The vinyl ester compounds (f) may be used alone, or a plurality of kinds of the compounds may be used in combination.

The total amount of the vinyl ester compound (f) and the rubber (a), based on 100 parts by mass of the rubber (a), is preferably from 105 to 200 parts by mass, more preferably from 105 to 180 parts by mass, and even more preferably from 110 to 150 parts by mass. Provided that the total amount of the rubber (a) and the vinyl ester compound (f) is not more than 200 parts by mass based on 100 parts by mass of the rubber (a), the amount of the vinyl ester compound (f) does not become excessive. Accordingly, the effect of the rubber (a) in improving the adhesive strength of the cured product of the adhesive composition is not impaired. As a result, the adhesive strength of the cured product of the adhesive composition can be further enhanced. By ensuring that the total amount of the vinyl ester compound (f) and the rubber (a) is at least 105 parts by mass based on 100 parts by mass of the rubber (a), the adhesive strength can be furthermore enhanced. That is, the amount of the vinyl ester compound (f) may be preferably 5 to 100 parts by mass based on 100 parts by mass of the rubber (a), more preferably 5 to 80 part by mass, and still more preferably 10 to 50 parts by mass.

### <Inorganic filler (g)>

The adhesive composition of the present embodiment may also include an inorganic filler (g) which is other than the acicular filler (d) having the fiber length of 500 to 2000 µm and the aspect ratio of 5 to 300. The inorganic filler (g) in the adhesive composition of the present embodiment has the functions of improving the workability similar to the acicular filler (d) when the adhesive composition is applied to a substrate. The inorganic filler (g) also has the functions of increasing the mechanical strength of the cured product. The material, the kinds and the amount of the inorganic filler (g) may be selected appropriately with due consideration of the required properties, such as the workability when the adhesive composition is applied to a substrate, and the mechanical strength and external appearance and the like of the cured product of the adhesive composition.

Further, by using an insulating filler as the inorganic filler (g), an insulating adhesive composition can be produced. By using a conductive filler as the inorganic filler (g), a conductive adhesive composition can be produced.

There are no particular limitations on the inorganic filler (g). Examples thereof include, in addition to glass fiber and wollastonite which do not have a fiber length of 500 to 2000 µm and an aspect ratio of 5 to 300, calcium carbonate, aluminum oxide (alumina), silica, glass powder, glass flakes, magnesium silicate, hydrous magnesium silicate, magnesium carbonate, mica, talc, kaolin, clay, zeolite, asbestos, pearlite, baryte, silica sand, silicon carbide, boron nitride, dolomite, glass balloons, hollow balloons, aluminum hydroxide, white limestone, zirconium oxide, antimony trioxide, titanium oxide, molybdenum dioxide, carbon black, fine metal powders of silver or copper or the like, metal oxides such as zinc oxide, and glass beads or grass fibers that have been surface-coated with a metal.

In those cases where the adhesive composition is an insulating adhesive composition, if consideration is given to the ease of availability and the heat resistance and mechanical strength of the cured product, among these inorganic fillers (g), calcium carbonate, aluminum oxide, silica, talc, aluminum hydroxide and glass fiber having a fiber length which is less than 500 µm, are preferred.

In those cases where the adhesive composition is a conductive adhesive composition, among these inorganic fillers (g), carbon black, fine metal powders of silver or copper or the like, metal oxides such as zinc oxide, and glass beads that have been surface-coated with a metal are preferred.

Products obtained by surface-treating the aforementioned inorganic filler (g) may also be used as the inorganic filler (g). The inorganic fillers (g) may be used alone, or a plurality of kinds of the fillers may be used in combination.

The total amount of the inorganic filler (g) and the acicular filler (d), based on 100 parts by mass of the amount of the rubber (a), is preferably from 60 to 800 parts by mass, more preferably from 100 to 700 parts by mass, and even more preferably from 150 to 600 parts by mass. Provided that the total amount of the inorganic filler (g) and the acicular filler (d), based on 100 parts by mass of the amount of the rubber (a), is at least 60 parts by mass, the viscosity of the adhesive composition can be adjusted to a viscosity that enables favorable handling. Further, provided that the total amount of the inorganic filler (g) and the acicular filler (d), based on 100 parts by mass of the amount of the rubber (a), is not more than 800 parts by mass, the superior adhesive strength in a temperature range of an ordinary temperature to about 200°C and superior thermal shock resistance and superior heat resistance of the cured product of the adhesive composition can be maintained.

The amount of the inorganic filler (g) can be optionally selected. The amount of the inorganic filler (g), based on 100 parts by mass of the acicular filler (d), is preferably 20 to 300 parts by mass, more preferably 20 to 250 parts by mass, and still more preferably 20 to 200 parts by mass. Provided that the amount of the inorganic filler (g) is 20 to 300 parts by mass, the superior adhesive strength in a temperature range of an ordinary temperature to about 200°C and superior thermal shock resistance and high heat resistance of the cured product of the adhesive composition can be maintained.

The volume average particle diameter d50 of the inorganic filler (g) is preferably in a range from 1 to 200 µm. Provided that the volume average particle diameter d50 of the inorganic filler (g) is in the above range, the strength of the cured product is furthermore enhanced, and the influence to the workability of the composition can be minimized and therefore preferable. The volume average particle diameter d50 of the inorganic filler (g) can be measured by the laser diffraction/ scattering type particle size distribution measuring method.

### <Thixotropic agent>

The adhesive composition of the present embodiment may contain a thixotropic agent. The thixotropic agent is used for the purposes of improving the mixability of the adhesive composition, and adjusting the viscosity of the composition to a level suitable for operations of troweling or the like. A single thixotropic agent may be used alone, or a plurality of kinds of the thixotropic agents may be used in combination.

An organic thixotropic agent or an inorganic thixotropic agent may be used as the thixotropic agent.

Examples of the organic thixotropic agents include hydrogenated castor oil-based agents, amide-based agents, polyethylene oxide-based agents, polymerized plant-based oil-based agents, surfactant-based agents, and composite agents containing a combination of such agents. Specific examples thereof include DISPARLON (a registered trademark) 6900-20X (manufactured by Kusumoto Chemicals, Ltd.), but the organic thixotropic agent is not limited to such an agent.

Examples of inorganic thixotropic agents include hydrophobically treated or hydrophilically treated silica and bentonite, which are other than the inorganic filler (g) and the acicular filler (d). Examples of hydrophobic inorganic thixotropic agents include REOLOSIL (a registered trademark) PM-20L (a gas-phase silica manufactured by Tokuyama Corporation), AEROSIL (a registered trademark) AEROSIL R-106 (manufactured by Nippon Aerosil Co., Ltd.), and hydrophobic fumed silica (product name: CAB-O-SIL (manufactured by Cabot Corporation)). Examples of hydrophilic inorganic thixotropic agents include AEROSIL (a registered trademark) AEROSIL 200 (manufactured by Nippon Aerosil Co., Ltd.) and the like. However, the inorganic thixotropic agents are not limited thereto. In those cases where a hydrophilic pyrogenic silica is used as the inorganic thixotropic agent, the degree of thixotropy can be altered by adding a thixotropic modifier such as BYK (a registered trademark) R605 (manufactured by BYK-Chemie gesellschaft mit beschrankter Haftung) or BYK (a registered trademark) R606 (manufactured by BYK-Chemie gesellschaft mit beschrankter Haftung).

The amount of the thixotropic agent, based on 100 parts by mass of the total amount of the rubber (a), the polymerizable monomer (b), the radical polymerization initiator (c), the acicular filler (d), the polymerizable monomer (e), the vinyl ester compound (f) and the inorganic filler (g) (the total of (a) to (g)), is preferably from 0 to 8 parts by mass, more preferably from 0 to 5 parts by mass, and even more preferably from 0 to 3 parts by mass. Provided that the amount of the thixotropic agent is not more than 8 parts by mass based on 100 parts by mass of the total of (a) to (g), the adhesive composition having a viscosity and thixotropic properties that enable favorable handling can be obtained.

### <Additives>

The adhesive composition of the present embodiment may, if necessary, also contain other additives. By including additives, the hardness, strength, moldability, durability and water resistance of the cured product of the adhesive composition can be improved. Examples of the additives include silane coupling agents, antifoaming agents, waxes, wetting and dispersing agents, polymerization inhibitors, and curing accelerators and the like. A single additive may be used alone, or a plurality of kinds of the additives may be used in combination.

There are no particular limitations on the amount of additives used, provided that the effects of the present invention are not impaired. The amount of additives based on 100 parts by mass of the total amount of (a) to (g) is preferably from 0 to 10 parts by mass, more preferably from 0 to 8 parts by mass, and even more preferably from 0 to 5 parts by mass.

As the silane coupling agent, a compound having radical polymerizability is preferably used. Specific examples thereof include 3-methacryloxypropyltrimethoxysilane, vinyltrimethoxysilane, vinyltriethoxysilane, and vinyltris(2-methoxyethoxy)silane. Among these, the use of 3-methacryloxypropyltrimethoxysilane as the silane coupling agent is particularly preferred.

Examples of the antifoaming agents include silicone-based antifoaming agents and non-silicone-based antifoaming agents. Specifically, for example, commercially available products including pure silicone-based antifoaming agents such as ST86PA (product name, manufactured by Dow Corning Toray Silicone Co., Ltd.) may be used. Further, specific examples of non-silicone-based antifoaming agents include DISPARLON P-420 (product name, manufactured by Kusumoto Chemicals, Ltd.). A single antifoaming agent may be used alone, or a plurality of kinds of the antifoaming agents may be used in combination.

Conventional materials may be used as the waxes. Specific examples thereof include petroleum waxes (such as paraffin wax and microcrystalline wax), plant-based waxes (such as candelilla wax, rice wax and vegetable wax), animal-based waxes (such as beeswax and spermaceti), mineral-based waxes (such as montan wax), and synthetic waxes (such as polyethylene wax and amide wax). One of these waxes may be used alone, or a combination of two or more waxes may be used.

Commercially available waxes may also be used, and examples thereof include special waxes such as BYK (a registered trademark) S-750 (manufactured by BYK-Chemie Japan K.K.), BYK (a registered trademark) S-740 (manufactured by BYK-Chemie Japan K.K.) and BYK (a registered trademark) LP-S6665 (manufactured by BYK-Chemie Japan K.K.).

Conventional materials may be used as the wetting and dispersing agents. Specific examples thereof include cationic surfactants, anionic surfactants, nonionic surfactants and amphiphilic polymers. Single wetting and dispersing agent may be used alone, or a plurality of kinds of the wetting and dispersing agents may be used in combination.

Commercially available products such as BYK (a registered trademark) 995 (manufactured by BYK-Chemie Japan K.K.), which is a mixture containing a phosphoric acid polyester, may also be used as the wetting and dispersing agent.

Conventional materials may be used as the polymerization inhibitors. Specific examples thereof include methoquinone, hydroquinone, dibutylhydroxytoluene, tertiary-butylhydroquinone, trimethylhydroquinone, tertiary-butylcatechol, para-benzoquinone, tertiary-butyl-para-benzoquinone, 2-mercaptobenzimidazole, and 4,4'-bis(α,α-dimethylbenzyl)diphenylamine. Single polymerization inhibitor may be used alone, or a plurality of kinds of the polymerization inhibitors may be used in combination.

The polymerization inhibitor should be used in an amount that does not impair the curability of the adhesive composition.

Conventional materials may be used as the curing accelerators. Specific examples thereof include cobalt naphthenate which reacts with ketone peroxide-based organic peroxides, vanadium pentoxide which reacts with hydroperoxide-based organic peroxides, and dimethylaniline which reacts with diacyl peroxide-based organic peroxides. Single curing accelerator may be used alone, or a plurality of kinds of the curing accelerators may be used in combination.

The curing accelerator is preferably used in an amount that does not impair the storage stability.

### [Method for Producing Radical-Curable Adhesive Composition]

Examples of the radical-curable adhesive composition includes one-liquid type compositions, and two or more liquids type compositions in which said liquids are mixed together prior to use. In terms of simplifying the process during use, one-liquid type compositions are preferred.

There are no particular limitations on the method used for producing a one-liquid type adhesive composition of the present embodiment. For example, production can be achieved by a method in which a "step 1", a "step 2" and a "step 3" described below are performed in this order.

### [Step 1]

The rubber (a) and the polymerizable monomer (b) are mixed together to prepare a mixed liquid (i).

### [Step 2]

The mixed liquid (i) and the radical polymerization initiator (c) are mixed together to prepare a mixed liquid (ii).

### [Step 3]

The mixed liquid (ii) and the acicular filler (d) are mixed together to prepare an adhesive composition composed of a mixed liquid (iii).

There are no particular limitations on the mixing methods used in "step 1", "step 2" and "step 3", and conventional methods may be used. From the viewpoint of ensuring uniform mixing, and from the viewpoint of suppressing degeneration of the various components, the temperature during the mixing performed in "step 1", "step 2" and "step 3" is preferably from 10 to 50°C, more preferably from 15 to 40°C, and even more preferably from 15 to 30°C.

When the adhesive composition is produced using a method in which "step 1", "step 2" and "step 3" are performed in this order, the storage stability of the adhesive composition can be ensured more easily and the radical polymerization initiator (c) and the acicular filler (d) can be mixed uniformly in a short time as compared with a case in which, for example, the rubber (a), the polymerizable monomer (b), the radical polymerization initiator (c) and the acicular filler (d) are mixed together at the same time.

In those cases where the adhesive composition of the present embodiment includes the polymerizable monomer (e) and/or the vinyl ester compound (f), it is preferable that the polymerizable monomer (e) and/or the vinyl ester compound (f) are mixed uniformly before the radical polymerization starts. Accordingly, in "step 1", the polymerizable monomer (e) and/or the vinyl ester compound (f) are preferably mixed together with the rubber (a) and the polymerizable monomer (b).

Further, in those cases where the adhesive composition of the present embodiment includes other components besides the rubber (a), the polymerizable monomer (b), the radical polymerization initiator (c), the acicular filler (d), the polymerizable monomer (e) and the vinyl ester compound (f), from the viewpoint of ensuring uniform mixing of the various components, a "step 4" described below is preferably performed after "step 3".

### [Step 4]

The mixed liquid (iii) obtained in "step 3" and the other components are mixed together to prepare the adhesive composition.

### [Method for Curing Radical-Curable Adhesive Composition]

Although not particularly limited, the adhesive composition of the present embodiment is preferably cured by heating from the viewpoint of productivity. There are no particular limitations on the method used for heating the adhesive composition, but from the viewpoint of ensuring uniform heating of the adhesive composition, a thermostatic chamber is preferably used.

From the viewpoint of the production efficiency for the cured product, the heating time of the adhesive composition is preferably within a range from 1 minute to 24 hours, and may be adjusted in accordance with the curing time required from the start of heating of the adhesive composition until a cured product is obtained. In those cases where the radical polymerization initiator (c) is an organic peroxide, the curing time used for the adhesive composition can be adjusted by using a heating temperature which is selected by taking the half-life characteristics of the organic peroxide into consideration.

From the viewpoint of the production efficiency of the cured product, the heating temperature (curing temperature) used for the adhesive composition is preferably set to a temperature which is higher than the one-hour half-life temperature of the radical polymerization initiator (c). Further, when the adhesive composition is used as an adhesive, the heating temperature mentioned above is preferably lower than the temperature at which the substrate which is bonded by the adhesive undergoes deformation or degeneration.

The adhesive composition of the present embodiment contains the rubber (a), the polymerizable monomer (b), the radical polymerization initiator (c) and the acicular filler (d). Accordingly, by curing the adhesive composition of the present embodiment, a cured product that exhibits superior adhesive strength under high-temperature conditions and exhibits superior thermal shock resistance can be obtained.

Specifically, a cured product of the adhesive composition of the present embodiment is able to achieve superior adhesive strength, within a temperature range from normal temperature to about 200°C, to substrates composed of metals such as iron, aluminum and copper which are used as electric and electronic component materials.

Further, a cured product of the adhesive composition of the present embodiment is able to achieve superior adhesive strength, within a temperature range from normal temperature to about 200°C, even after the cured product adhered to substrates composed of metals such as iron, aluminum and copper which are used as electric and electronic component materials is maintained for several hundred hours under high-temperature condition which exceeds 150°C, or even after several hundred times of cooling/heating cycle are repeatedly performed for the cured product.

Accordingly, for example, components or the like composed of the metal described above are used as substrates, and an aforementioned cured product is formed between two of these substrates to bond the two substrates together, the surface of the substrates which contact the cured product need not necessarily be subjected to a preliminary surface treatment in advance. Accordingly, the two substrates can be bonded efficiently.

Further, in those cases where the adhesive composition of the present embodiment is an insulating adhesive composition obtained by appropriately selecting the acicular filler (d) and the inorganic filler (g), the insulation resistance of the cured product of the adhesive composition is preferably within a range from 1 × 10¹³ Ωcm² to 1 × 10¹⁶ Ωcm² in order to achieve favorable insulating properties.

In this way, the adhesive composition of the present embodiment can be used favorably as an adhesive and/or an encapsulating agent for electric and electronic component, and as an adhesive for transport device.

### [Adhesive]

An adhesive of the embodiment contains the adhesive composition of the above embodiment. Accordingly, the adhesive of this embodiment exhibits superior adhesive strength under high-temperature conditions, and a cured product having superior thermal shock resistance can be obtained.

In the present embodiment, an adhesive which consists of the adhesive composition described above was described as an example, but the adhesive of the present invention only need to contain the adhesive composition of the present invention. Accordingly, the adhesive of the present invention may be composed solely of the adhesive composition of the present invention, or may contain the adhesive composition of the present invention together with other components. Examples of other components include components which may be contained in conventional adhesives.

### [Electric and Electronic Component]

An electrical or electronic component of the embodiment includes a component that has been bonded and/or encapsulated using a cured product of the adhesive composition of the above embodiment. Accordingly, the electric and electronic component of this embodiment has favorable heat shock resistance.

### [Transport Device]

A transport device of the present embodiment includes a component that has been bonded using a cured product of the adhesive composition of the above embodiment. Accordingly, the transport device of this embodiment has favorable heat shock resistance.

### EXAMPLES

The present invention is described below in further detail using examples and comparative examples. However, the present invention is in no way limited by the following examples.

### [Preparation of Adhesive Compositions]

Using the method described below, adhesive compositions of Examples 1 to 6 and Comparative Examples 1 to 4 were prepared so that they contain the materials shown in Table 1 in the mass ratios shown in Table 2 and Table 3.

Components shown in Table 1 are explained. A component (a) is a rubber which has one or more (meth)acryloyl groups within a single molecular chain thereof. A component (b) is a polymerizable monomer which has both an epoxy group and a (meth)acryloyloxy group in molecule thereof. A component (c) is a radical polymerization initiator. A component (d) is an acicular filler having a fiber length of 500 to 2000 µm and an aspect ratio of 5 to 300. A component (e) is a polymerizable monomer other than the polymerizable monomer (b) and excluding (meth)acrylic acid. A component (f) is a vinyl ester compound. A component (g) is an inorganic filler (g) other than the acicular filler (d).

The numerical values of the components (a) to (g), the thixotropic agent and the additives shown in Table 2 represent mass (g) values.

Table 3 shows the amount (parts by mass) of the component (d) based on 100 parts by mass of the component (a); the total amount (parts by mass) of the component (b) and the component (e) based on 100 parts by mass of the component (a); the amount (parts by mass) of the component (b) based on 100 parts by mass of the total of the component (b) and the component (e); the total amount (parts by mass) of the component (a) and the component (f) based on 100 parts by mass of the component (a); the amount (parts by mass) of the component (c) based on 100 parts by mass of the total of the components (a), (b), (e) and (f); the amount (parts by mass) of the component (d) and the component (g) based on 100 parts by mass of the component (a); the amount (parts by mass) of the component (g) based on 100 parts by mass of the component (d); the amount (parts by mass) of the thixotropic agent based on 100 parts by mass of the total of the components (a) to (g); and the amount (parts by mass) of the additive based on 100 parts by mass of the total of the components (a) to (g).

**[Table 1]**

| Component | Name | Manufacturer | Product name and remarks |
|---|---|---|---|
| (a) | NBR having an acryloyl group | Showa Denko K.K. | Acrylonitrile-butadiene copolymer wherein RIPOXY EFN-1000 (molecular weight: 3400) is included as a main chain and terminal ends are acrylate- modified. Liquid at 25°C; Viscosity at 27°C: 500 Pa·s |
| (b) | Glycidyl methacrylate | Showa Denko K.K. | BLENMER G |
| (c) | Radical polymerization initiator | NOF Corporation | PERHEXA HC: 1,1-di(t- hexylperoxy)cyclohexane (one-hour half-life temperature: 107°C) |
| (d) | Wollastonite 4 | NYCO Corporation | WOLLASTONITE NYAD-G Fiber length: 825 µm, Diameter: 55 µm, and Aspect ratio: 15 |
| | Glass fiber | Fuji Fiber Grass Co., Ltd. | G CHOPP CS2HB-406S Fiber length: 1.5 ± 0.5 mm, Diameter: 11 ± 1 µm, and Aspect ratio: 136 |
| (e) | Isobornyl methacrylate | Kyoeisha Chemical Co., LTD. | LIGHT ESTER IBX |
| (f) | Bisphenol A vinyl ester resin | Showa Denko K.K. | RIPOXY VR-77 |
| (g) | Wollastonite 1 | NYCO Corporation | WOLLASTONITE NYGLOS 4W Fiber length: 63 µm, Diameter: 7 µm, and Aspect ratio: 9 |
| | Wollastonite 2 | NYCO Corporation | WOLLASTONITE NYGLOS 8 Fiber length: 150 µm, Diameter: 12 µm, and Aspect ratio: 12.5 |
| | Wollastonite 3 | NYCO Corporation | WOLLASTONITE NYGLOS 12 Fiber length: 234 µm, Diameter: 18 µm, and Aspect ratio: 13 |
| | Glass fiber | Central Glass Fiber Co., Ltd. | Milled fiber Fiber length: 150 µm, Diameter: 11 µm, and Aspect ratio: 13.6 |
| | Hydrous magnesium silicate | Fuji Talc Industrial Co., Ltd. | Talc MS410 Median diameter (d50): 10 µm |
| Thixotropic agent | | Cabot Corporation | CAB-O-SIL TS-720 Fumed Silica |
| Additive (silane coupling agent) | | Shin-Etsu Chemical Co., Ltd. | KBM-503 |

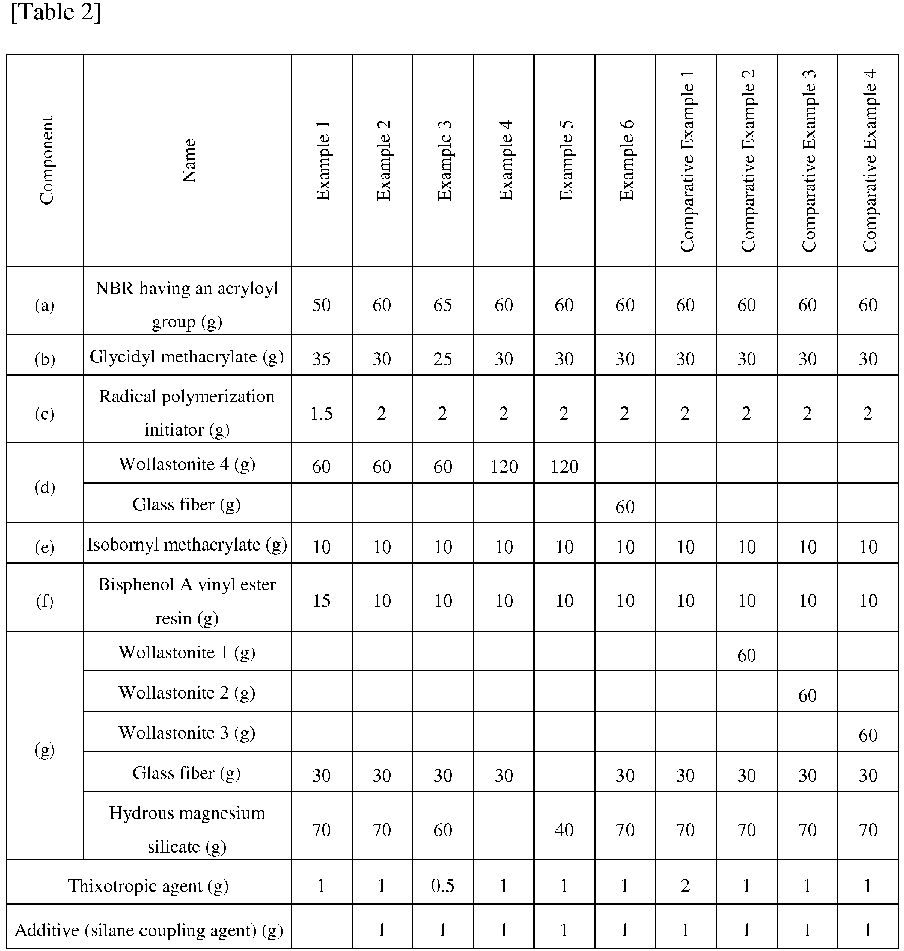

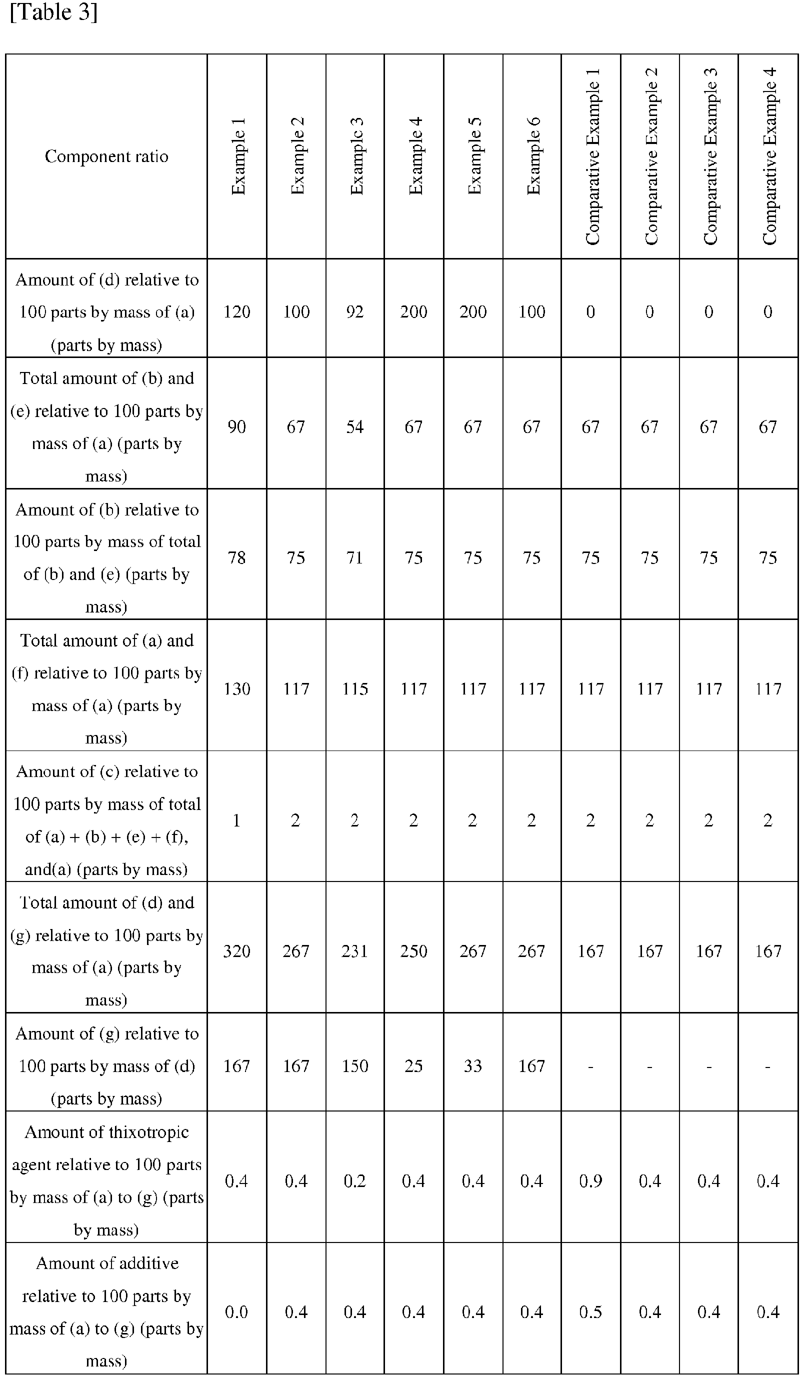

### <Examples 1 to 6, Comparative Examples 1 to 4>

The components (a) to (c), (e), (f) and additives were placed in disposable cups in the mass ratios shown in Table 2 and Table 3, and a Disper (manufactured by Primix Corporation) was used to mix the components for 10 minutes at 25°C, thus obtaining mixtures. To the mixtures, the components (d) and (g) and the thixotropic agent were added in the mass ratios shown in Table 2 and Table 3, and a planetary mixer (manufactured by Primix Corporation) was used to mix the components for 10 minutes at 25°C to obtain adhesive compositions.

Insulation resistance and adhesive strength of cured products of the adhesive compositions of Examples 1 to 6 and Comparative Examples 1 to 4 obtained in the manner described above were measured using the methods described below.

### <Insulation Resistance Measurement>

A 2 mm spacer was inserted between two glass substrates to which a PET film had been adhered, the adhesive composition was injected into the 2 mm space, and the adhesive composition was cured by heating it for 30 minutes in a 150°C thermostatic chamber to form a plate. A circular test piece for measuring insulation resistance having a diameter of about 100 mm and a thickness of 2 mm was prepared from the above molded plate. Based on the test for "5.13 Resistivity" disclosed in Japanese Industrial Standard JIS K-6911 "Testing Methods for Thermosetting Plastics", the insulation resistance of the cured product (test piece) of each adhesive composition was measured.

The results of measuring the insulation resistance in this manner showed that the insulation resistance of the cured products of the adhesive compositions of Examples 1 to 6 and Comparative Examples 1 to 4 were within a range from 1 × 10¹³ Ωcm² to 1 × 10¹⁶ Ωcm², and exhibited high insulation resistance.

### <Adhesive Strength Measurement>

Using the method described below, a test piece for measuring the adhesive strength was prepared from the materials described below, and the adhesive strength of the cured product of each adhesive composition was measured based on Japanese Industrial Standard JIS K-6850: 1999 "Adhesives - Determination of tensile lap-shear strength of rigid-to-rigid bonded assemblies".

In the adhesive strength measurement, the test speed was set to 5 mm/min, and the temperature of the test environment was set to 200°C. The value obtained by dividing the maximum stress by the adhesion surface area (12.5 mm × 25.0 mm) was recorded as the adhesive strength (MPa).

The materials used for the test pieces were pieces having a shape of 2 mm × 25 mm × 100 mm formed from iron (rolled steel for general-purpose structures, SS400, no surface treatment).

The adhesive composition was applied to a bonding surface (12.5 mm × 25.0 mm) of one test piece to form a coating film, and a bonding surface of the other test piece was then superimposed on the first test piece so that the test pieces were overlapped with each other via the coating film. Subsequently, the adhesive composition was cured by heating for 30 minutes in a 150°C thermostatic chamber to prepare a test piece for measuring the adhesive strength. The thickness of the coating film after curing (the thickness of the cured product) was 0.1 to 0.2 mm.

Then, as the test pieces used for measuring the adhesive strength, test pieces obtained immediately after the curing (initial), test pieces obtained by maintaining the test pieces obtained immediately after the curing for 300 hours at 200°C (after 300 hours at 200°C), and test pieces obtained by repeating 300 times a cycle of maintaining the test pieces obtained immediately after the curing in a chamber for 30 minutes at 160°C and then maintaining the test pieces in a chamber for 30 minutes at -40°C (after 300 cycles) were prepared respectively to measure the adhesive strength. The results of the measurements are shown in Table 4.

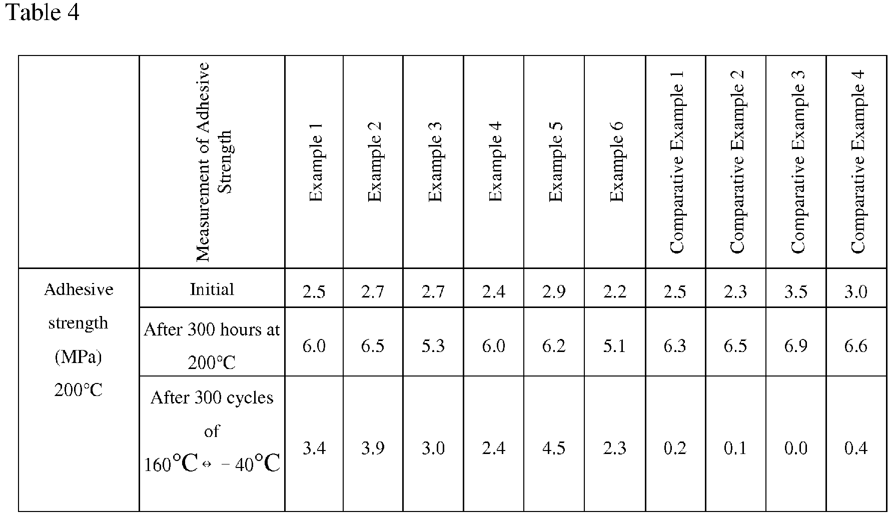

As shown in Table 4, the cured products of the adhesive compositions of Examples 1 to 6 had superior initial adhesive strength to iron, and it was confirmed that the cured products exhibited superior adhesive strength at high-temperature conditions of 200°C. Further, the cured products of the adhesive compositions of Examples 1 to 6 had superior adhesive strength to iron even after maintained for 300 hours at 200°C, and it was confirmed that the cured products had superior heat resistance. The cured products of the adhesive compositions of Examples 1 to 6 had superior adhesive strength to iron even after the thermal shock of 300 cycles of 160°C to -40°C was performed, and it was confirmed that the cured products had superior thermal shock resistance.

With respect to the cured products of the adhesive compositions of Comparative Examples 1 to 4, which did not include the acicular filler (d), it was confirmed that the cured products had superior initial adhesive strength to iron, and had superior adhesive strength to iron even after maintained for 300 hours at 200°C. However, the adhesive strength of the cured products of the adhesive compositions of Comparative Examples 1 to 4 deteriorated by imparting the thermal shock of 300 cycles of 160°C to -40°C, and the cured products did not have insufficient thermal shock resistance.

## Claims

1. A radical-curable adhesive composition comprising:
a rubber (a) having one or more (meth)acryloyl groups within a single molecular chain thereof,
a polymerizable monomer (b) having both an epoxy group and a (meth)acryloyloxy group in a molecule thereof,
a radical polymerization initiator (c) and
an acicular filler (d) having a fiber length of 500 to 2000 µm and an aspect ratio of 5 to 300.

2. The radical-curable adhesive composition according to Claim 1, wherein the acicular filler (d) is wollastonite or a glass fiber.

3. The radical-curable adhesive composition according to Claim 1 or 2, wherein an amount of the acicular filler (d) is 50 to 500 parts by mass based on 100 parts by mass of the rubber (a).

4. The radical-curable adhesive composition according to any one of Claims 1 to 3, wherein the rubber (a) is a polymer of a monomer containing at least acrylonitrile.

5. The radical-curable adhesive composition according to any one of Claims 1 to 4, wherein a main chain of the rubber (a) is a copolymer of acrylonitrile and butadiene.

6. The radical-curable adhesive composition according to any one of Claims 1 to 5, wherein the polymerizable monomer (b) includes glycidyl (meth)acrylate.

7. The radical-curable adhesive composition according to any one of Claims 1 to 6, wherein the radical-curable adhesive composition also contains a polymerizable monomer (e) other than the polymerizable monomer (b) and excluding (meth)acrylic acid.

8. The radical-curable adhesive composition according to any one of Claims 1 to 7, wherein the radical-curable adhesive composition also contains a polymerizable monomer (e) other than the polymerizable monomer (b) and excluding (meth)acrylic acid, and the total amount of the polymerizable monomer (b) and the polymerizable monomer (e) other than the polymerizable monomer (b) and excluding (meth)acrylic acid is from 20 to 200 parts by mass based on 100 parts by mass of the rubber (a).

9. The radical-curable adhesive composition according to any one of Claims 1 to 8, wherein the radical-curable adhesive composition also contains a polymerizable monomer (e) other than the polymerizable monomer (b) and excluding (meth)acrylic acid, and the amount of the polymerizable monomer (b) is from 10 to 100 parts by mass based on 100 parts by mass of the total amount of the polymerizable monomer (b) and the polymerizable monomer (e) other than the polymerizable monomer (b) and excluding (meth)acrylic acid.

10. The radical-curable adhesive composition according to any one of Claims 1 to 9, wherein the radical-curable adhesive composition also contains a vinyl ester compound (f).

11. The radical-curable adhesive composition according to Claim 10, wherein the total amount of the rubber (a) and the vinyl ester compound (f) is from 105 to 200 parts by mass based on 100 parts by mass of the rubber (a).

12. The radical-curable adhesive composition according to any one of Claims 1 to 11, wherein the radical-curable adhesive composition also contains an inorganic filler (g) other than the acicular filler (d).

13. The radical-curable adhesive composition according to any one of Claims 1 to 12, wherein the radical-curable adhesive composition also contain an inorganic filler (g) other than the acicular filler (d), and the total amount of the acicular filler (d) and the inorganic filler (g) other than the acicular filler (d) is from 60 to 800 parts by mass based on 100 parts by mass of the rubber (a).

14. The radical-curable adhesive composition according to any one of Claims 1 to 13, wherein a cured product of the adhesive composition has insulating properties.

15. An adhesive which contains the radical-curable adhesive composition according to any one of Claims 1 to 14.

16. The radical-curable adhesive composition according to any one of Claims 1 to 14, wherein the amount of the polymerizable monomer (b) is from 20 to 200 parts by mass based on 100 parts by mass of the rubber (a),
(i) the amount of the radical polymerization initiator (c) is from 0.1 to 10 parts by mass based on 100 parts by mass of the amount of the rubber (a), the monomer (b), a monomer (e) and a compound (f), in a case where the polymerizable monomer (e) and the vinyl ester compound (f) are included in the radical-curable adhesive composition,
(ii) the amount of the radical polymerization initiator (c) is from 0.1 to 10 parts by mass based on 100 parts by mass of the amount of the rubber (a), the monomer (b) and a polymerizable monomer (e), in a case where the polymerizable monomer (e) is included and a vinyl ester compound (f) is not included in the radical-curable adhesive composition,
(iii) the amount of the radical polymerization initiator (c) is from 0.1 to 10 parts by mass based on 100 parts by mass of the amount of the rubber (a), the monomer (b), and a vinyl ester compound (f), in a case where a polymerizable monomer (e) is not included and the vinyl ester compound (f) is included in the radical-curable adhesive composition, and
(iv) the amount of the radical polymerization initiator (c) is from 0.1 to 10 parts by mass based on 100 parts by mass of the amount of the rubber (a) and the monomer (b), in a case where a vinyl ester compound (f) and a polymerizable monomer (e) are not included in the radical-curable adhesive composition, and
an amount of the acicular filler (d) is 50 to 400 parts by mass based on 100 parts by mass of the amount of the rubber (a).

17. The radical-curable adhesive composition according to any one of Claims 1 to 14 and 16, wherein the radical-curable adhesive composition also includes a polymerizable monomer (e) other than the polymerizable monomer (b) and excluding (meth)acrylic acid, a vinyl ester compound (f) and an inorganic filler (g),
an amount of the polymerizable monomer (e) is 5 to 70% by mass based on 100 parts by mass of the total amount of the polymerizable monomer (b) and the polymerizable monomer (e),
an amount of the vinyl ester compound (f) is 5 to 100 parts by mass based on 100 parts by mass of the amount of the rubber (a), and
an amount of the inorganic filler (g) is 20 to 300 parts by mass based on 100 parts by mass of the acicular filler (d).

## Patentansprüche

1. Radikalisch härtbare Klebstoffzusammensetzung, die Folgendes umfasst:
Kautschuk (a) mit einer oder mehreren (Meth)acryloylgruppen innerhalb einer einzigen Molekülkette davon,
ein polymerisierbares Monomer (b) mit sowohl einer Epoxidgruppe als auch einer (Meth)acryloyloxygruppe in einem ihrer Moleküle,
einen Initiator für die radikalische Polymerisation (c) und
einen nadelförmigen Füllstoff (d) mit einer Faserlänge von 500 bis 2000 µm und einem Aspektverhältnis von 5 bis 300.

2. Radikalisch härtbare Klebstoffzusammensetzung nach Anspruch 1, wobei der nadelförmige Füllstoff (d) Wollastonit oder eine Glasfaser ist.

3. Radikalisch härtbare Klebstoffzusammensetzung nach Anspruch 1 oder 2, wobei eine Menge des nadelförmigen Füllstoffs (d), bezogen auf 100 Masseteile des Kautschuks (a), 50 bis 500 Masseteile beträgt.

4. Radikalisch härtbare Klebstoffzusammensetzung nach einem der Ansprüche 1 bis 3, wobei der Kautschuk (a) ein Polymer aus einem Monomer ist, das mindestens Acrylnitril enthält.

5. Radikalisch härtbare Klebstoffzusammensetzung nach einem der Ansprüche 1 bis 4, wobei eine Hauptkette des Kautschuks (a) ein Copolymer aus Acrylnitril und Butadien ist.

6. Radikalisch härtbare Klebstoffzusammensetzung nach einem der Ansprüche 1 bis 5, wobei das polymerisierbare Monomer (b) Glycidyl(meth)acrylat enthält.

7. Radikalisch härtbare Klebstoffzusammensetzung nach einem der Ansprüche 1 bis 6, wobei die radikalisch härtbare Klebstoffzusammensetzung auch ein polymerisierbares Monomer (e), das nicht das polymerisierbare Monomer (b) und nicht (Meth)acrylsäure ist, enthält.

8. Radikalisch härtbare Klebstoffzusammensetzung nach einem der Ansprüche 1 bis 7, wobei die radikalisch härtbare Klebstoffzusammensetzung auch ein polymerisierbares Monomer (e), das nicht das polymerisierbare Monomer (b) und nicht (Meth)acrylsäure ist, enthält und die Gesamtmenge des polymerisierbaren Monomers (b) und des polymerisierbaren Monomers (e), das nicht das polymerisierbare Monomer (b) ist und nicht (Meth)acrylsäure ist, 20 bis 200 Masseteile, bezogen auf 100 Masseteile des Kautschuks (a), beträgt.

9. Radikalisch härtbare Klebstoffzusammensetzung nach einem der Ansprüche 1 bis 8, wobei die radikalisch härtbare Klebstoffzusammensetzung auch ein polymerisierbares Monomer (e), das nicht das polymerisierbare Monomer (b) ist und nicht (Meth)acrylsäure, enthält und die Menge des polymerisierbaren Monomers (b), bezogen auf 100 Massenteile der Gesamtmenge des polymerisierbaren Monomers (b) und des polymerisierbaren Monomer (e), das nicht das polymerisierbare Monomer (b) und nicht Meth)acrylsäure ist, 10 bis 100 Masseteile ist.

10. Radikalisch härtbare Klebstoffzusammensetzung nach einem der Ansprüche 1 bis 9, wobei die radikalisch härtbare Klebstoffzusammensetzung auch eine Vinylesterverbindung (f) enthält.

11. Radikalisch härtbare Klebstoffzusammensetzung nach Anspruch 10, wobei die Gesamtmenge des Kautschuks (a) und der Vinylesterverbindung (f), 105 bis 200 Masseteile, bezogen auf 100 Masseteile des Kautschuks (a), beträgt.

12. Radikalisch härtbare Klebstoffzusammensetzung nach einem der Ansprüche 1 bis 11, wobei die radikalisch härtbare Klebstoffzusammensetzung auch einen anorganischen Füllstoff (g), der nicht der nadelförmige Füllstoffs (d) ist, enthält.

13. Radikalisch härtbare Klebstoffzusammensetzung nach einem der Ansprüche 1 bis 12, wobei die radikalisch härtbare Klebstoffzusammensetzung auch einen anorganischen Füllstoff (g), der nicht der nadelförmige Füllstoffs (d) ist, enthält und die Gesamtmenge des nadelförmigen Füllstoffs (d) und des anorganischer Füllstoff (g), der nicht der nadelförmige Füllstoff (d) ist, 60 bis 800 Masseteile, bezogen auf 100 Masseteile des Kautschuks (a), beträgt.

14. Radikalisch härtbare Klebstoffzusammensetzung nach einem der Ansprüche 1 bis 13, wobei ein ausgehärtetes Produkt der Klebstoffzusammensetzung isolierende Eigenschaften aufweist.

15. Klebstoff, der die radikalisch härtbare Klebstoffzusammensetzung gemäß nach einem der Ansprüche 1 bis 14 enthält.

16. Radikalisch härtbare Klebstoffzusammensetzung nach einem der Ansprüche 1 bis 14, wobei die Menge des polymerisierbaren Monomers (b) 20 bis 200 Masseteile, bezogen auf 100 Masseteile des Kautschuks (a), beträgt,
(i) die Menge des Radikalpolymerisationsinitiators (c) 0,1 bis 10 Masseteile, bezogen auf 100 Masseteile der Menge des Kautschuks (a), des Monomers (b), eines Monomers (e) und einer Verbindung (f), wenn das polymerisierbare Monomer (e) und die Vinylesterverbindung (f) in der radikalisch härtbaren Klebstoffzusammensetzung enthalten sind, beträgt,
(ii) die Menge des Radikalpolymerisationsinitiators (c) 0,1 bis 10 Masseteile, bezogen auf 100 Masseteile der Menge des Kautschuks (a), des Monomers (b) und eines polymerisierbaren Monomers (e), wenn in der radikalisch härtbaren Klebstoffzusammensetzung das polymerisierbare Monomer (e) enthalten und eine Vinylesterverbindung (f) nicht enthalten ist, beträgt,
(iii) die Menge des Radikalpolymerisationsinitiators (c) 0,1 bis 10 Masseteile, bezogen auf 100 Masseteile der Menge des Kautschuks (a), des Monomers (b) und einer Vinylesterverbindung (f), wenn in der radikalisch härtbaren Klebstoffzusammensetzung ein polymerisierbares Monomer (e) nicht enthalten und die Vinylesterverbindung (f) enthalten ist, beträgt und
(iv) die Menge des Radikalpolymerisationsinitiators (c) 0,1 und 10 Masseteile, bezogen auf 100 Massenteile der Menge des Kautschuks (a) und des Monomers (b), wenn in der radikalisch härtbaren Klebstoffzusammensetzung eine Vinylesterverbindung (f) und ein polymerisierbares Monomer (e) nicht enthalten sind, beträgt und
die Menge des nadelförmigen Füllstoffs (d) 50 bis 400 Masseteile, bezogen auf 100 Masseteile der Kautschukmenge (a), beträgt.

17. Radikalisch härtbare Klebstoffzusammensetzung nach einem der Ansprüche 1 bis 14 und 16, wobei die radikalisch härtbare Klebstoffzusammensetzung auch ein polymerisierbares Monomer (e), das nicht das polymerisierbare Monomer (b) ist und nicht (Meth)acrylsäure ist, eine Vinylesterverbindung (f) und einen anorganischen Füllstoff (g) enthält,
eine Menge des polymerisierbaren Monomers (e) 5 bis 70 Masseprozent, bezogen auf 100 Masseteile der Gesamtmenge des polymerisierbaren Monomers (b) und des polymerisierbaren Monomers (e), ist,
eine Menge der Vinylesterverbindung (f) 5 bis 100 Masseteile, bezogen auf 100 Masseteile der Menge des Kautschuks (a), ist und
eine Menge des anorganischen Füllstoffs (g) 20 bis 300 Masseteile, bezogen auf 100 Masseteile des nadelförmigen Füllstoffs (d), ist.

## Revendications

1. Composition adhésive durcissable par voie radicalaire comprenant :
un caoutchouc (a) présentant un ou plusieurs groupes (méth)acryloyles par chaîne moléculaire de celui-ci,
un monomère polymérisable (b) présentant à la fois un groupe époxy et un groupe (méth)acryloyloxy par molécule de celui-ci,
un initiateur de polymérisation radicalaire (c) et
une charge aciculaire (d) présentant une longueur de fibre de 500 à 2 000 µm et un rapport de dimensions de 5 à 300.

2. Composition adhésive durcissable par voie radicalaire selon la revendication 1, dans laquelle la charge aciculaire (d) est de la wollastonite ou une fibre de verre.

3. Composition adhésive durcissable par voie radicalaire selon la revendication 1 ou 2, dans laquelle une quantité de la charge aciculaire (d) est de 50 à 500 parties en masse sur la base de 100 parties en masse du caoutchouc (a).

4. Composition adhésive durcissable par voie radicalaire selon l'une quelconque des revendications 1 à 3, dans laquelle le caoutchouc (a) est un polymère d'un monomère contenant au moins de l'acrylonitrile.

5. Composition adhésive durcissable par voie radicalaire selon l'une quelconque des revendications 1 à 4, dans laquelle une chaîne principale du caoutchouc (a) est un copolymère d'acrylonitrile et de butadiène.

6. Composition adhésive durcissable par voie radicalaire selon l'une quelconque des revendications 1 à 5, dans laquelle le monomère polymérisable (b) inclut du (méth)acrylate de glycidyle.

7. Composition adhésive durcissable par voie radicalaire selon l'une quelconque des revendications 1 à 6, dans laquelle la composition adhésive durcissable par voie radicalaire contient également un monomère polymérisable (e) autre que le monomère polymérisable (b) et excluant l'acide (méth)acrylique.

8. Composition adhésive durcissable par voie radicalaire selon l'une quelconque des revendications 1 à 7, dans laquelle la composition adhésive durcissable par voie radicalaire contient également un monomère polymérisable (e) autre que le monomère polymérisable (b) et excluant l'acide (méth)acrylique, et la quantité totale du monomère polymérisable (b) et du monomère polymérisable (e) autre que le monomère polymérisable (b) et excluant l'acide (méth)acrylique est de 20 à 200 parties en masse sur la base de 100 parties en masse du caoutchouc (a).

9. Composition adhésive durcissable par voie radicalaire selon l'une quelconque des revendications 1 à 8, dans laquelle la composition adhésive durcissable par voie radicalaire contient également un monomère polymérisable (e) autre que le monomère polymérisable (b) et excluant l'acide (méth)acrylique, et la quantité du monomère polymérisable (b) est de 10 à 100 parties en masse sur la base de 100 parties en masse de la quantité totale du monomère polymérisable (b) et du monomère polymérisable (e) autre que le monomère polymérisable (b) et excluant l'acide (méth)acrylique.

10. Composition adhésive durcissable par voie radicalaire selon l'une quelconque des revendications 1 à 9, dans laquelle la composition adhésive durcissable par voie radicalaire contient également un composé ester vinylique (f).

11. Composition adhésive durcissable par voie radicalaire selon la revendication 10, dans laquelle la quantité totale du caoutchouc (a) et du composé ester vinylique (f) est de 105 à 200 parties en masse sur la base de 100 parties en masse du caoutchouc (a).

12. Composition adhésive durcissable par voie radicalaire selon l'une quelconque des revendications 1 à 11, dans laquelle la composition adhésive durcissable par voie radicalaire contient également une charge inorganique (g) autre que la charge aciculaire (d).

13. Composition adhésive durcissable par voie radicalaire selon l'une quelconque des revendications 1 à 12, dans laquelle la composition adhésive durcissable par voie radicalaire contient également une charge inorganique (g) autre que la charge aciculaire (d), et la quantité totale de la charge aciculaire (d) et de la charge inorganique (g) autre que la charge aciculaire (d) est de 60 à 800 parties en masse sur la base de 100 parties en masse du caoutchouc (a).

14. Composition adhésive durcissable par voie radicalaire selon l'une quelconque des revendications 1 à 13, dans laquelle un produit durci de la composition adhésive présente des propriétés isolantes.

15. Adhésif qui contient la composition adhésive durcissable par voie radicalaire selon l'une quelconque des revendications 1 à 14.

16. Composition adhésive durcissable par voie radicalaire selon l'une quelconque des revendications 1 à 14, dans laquelle la quantité du monomère polymérisable (b) est de 20 à 200 parties en masse sur la base de 100 parties en masse du caoutchouc (a),
(i) la quantité de l'initiateur de polymérisation radicalaire (c) est de 0,1 à 10 parties en masse sur la base de 100 parties en masse de la quantité du caoutchouc (a), du monomère (b), d'un monomère (e) et d'un composé (f), dans un cas où le monomère polymérisable (e) et le composé ester vinylique (f) sont inclus dans la composition adhésive durcissable par voie radicalaire,
(ii) la quantité de l'initiateur de polymérisation radicalaire (c) est de 0,1 à 10 parties en masse sur la base de 100 parties en masse de la quantité du caoutchouc (a), du monomère (b) et d'un monomère polymérisable (e), dans un cas où le monomère polymérisable (e) est inclus et un composé ester vinylique (f) n'est pas inclus dans la composition adhésive durcissable par voie radicalaire,
(iii) la quantité de l'initiateur de polymérisation radicalaire (c) est de 0,1 à 10 parties en masse sur la base de 100 parties en masse de la quantité du caoutchouc (a), du monomère (b), et d'un composé ester vinylique (f), dans un cas où un monomère polymérisable (e) n'est pas inclus et le composé ester vinylique (f) est inclus dans la composition adhésive durcissable par voie radicalaire, et
(iv) la quantité de l'initiateur de polymérisation radicalaire (c) est de 0,1 à 10 parties en masse sur la base de 100 parties en masse de la quantité du caoutchouc (a) et du monomère (b), dans un cas où un composé ester vinylique (f) et un monomère polymérisable (e) ne sont pas inclus dans la composition adhésive durcissable par voie radicalaire, et
une quantité de la charge aciculaire (d) est de 50 à 400 parties en masse sur la base de 100 parties en masse de la quantité du caoutchouc (a).

17. Composition adhésive durcissable par voie radicalaire selon l'une quelconque des revendications 1 à 14 et 16, dans laquelle la composition adhésive durcissable par voie radicalaire inclut également un monomère polymérisable (e) autre que le monomère polymérisable (b) et excluant l'acide (méth)acrylique, un composé ester vinylique (f) et une charge inorganique (g),
une quantité du monomère polymérisable (e) est de 5 à 70 % en masse sur la base de 100 parties en masse de la quantité totale du monomère polymérisable (b) et du monomère polymérisable (e), une quantité du composé ester vinylique (f) est de 5 à 100 parties en masse sur la base de 100 parties en masse de la quantité du caoutchouc (a), et
une quantité de la charge inorganique (g) est de 20 à 300 parties en masse sur la base de 100 parties en masse de la charge aciculaire (d).
